# EUROPÄISCHE PATENTSCHRIFT

(11) **EP 3 938 858 B1**
(45) Veröffentlichungstag und Bekanntmachung des Hinweises auf die Patenterteilung: **18.01.2023**
(21) Anmeldenummer: 20711566.8
(22) Anmeldetag: 12.03.2020
(51) Int. Cl.: G05G 1/02, G05G 1/08, G05G 9/02, B60K 37/06, G06F 3/0362, G06F 3/044, G06F 3/039

(54) **DREHRINGSTELLER**
ROTARY ACTUATOR
ACTIONNEUR À ANNEAU TOURNANT

(30) Priorität: 15.03.2019 DE 102019001842
(43) Veröffentlichungstag der Anmeldung: 19.01.2022
(73) Patentinhaber: KOSTAL Automobil Elektrik GmbH & Co. KG, 58513 Lüdenscheid (DE)
(72) Erfinder: LENKENHOFF, Christian, 58332 Schwelm (DE); SCHIRP, Christian, 44789 Bochum (DE)
(74) Vertreter: Kerkmann, Detlef
(86) Internationale Anmeldenummer: PCT/EP2020/056626
(87) Internationale Veröffentlichungsnummer: WO 2020/187683

(56) Entgegenhaltungen:
- WO-A1-2018/137944
- FR-A1- 3 056 468
- FR-A1- 3 056 474

## Beschreibung

Die Erfindung betrifft einen Drehringsteller mit einem auf einer kapazitiv sensierenden Erfassungsfläche eines Touchpanels angeordneten Stator, mit einem am Stator drehbar gelagerten Grundkörper und mit einem gegen den Stator verdrehbaren Rampenring, an dem mindestens ein elektrisch leitendes Schleifkontaktelement angeordnet ist, welches mit einem Schleifkontakt an der Erfassungsfläche anliegt und dessen Position an der Erfassungsfläche durch das Touchpanel ermittelt werden kann.

Derartige Drehringsteller werden verwendet, um auf einem kapazitiv sensitiven Display ein haptisches Feedback zu ermöglichen. Das ist beispielsweise während einer Autofahrt vorteilhaft, da der Fahrer ohne hinzusehen nach dem Drehringsteller tasten kann und über diesen die Bedienung der Menüs übernehmen kann, ohne den Blick auf das Display wenden zu müssen. Solche aufgesetzten Drehringsteller verwenden die kapazitiv sensierende Erfassungsfläche eines Touchpanels, um die Drehstellung eines verdrehbaren Bedienelements an beispielsweise das Infotainmentsystem zu übermitteln. Das Touchpanel kann dabei entweder als Touchpad oder bevorzugt als Touchscreen ausgebildet sein, wobei ein Touchscreen zusätzlich Anzeigeelemente aufweist und damit Informationen zur aktuellen Drehstellung grafisch darstellen kann.

Bei Verwendung eines als Touchscreen ausgeführten Touchpanels oder auch bei Verwendung eines Touchpads und einem externen Display kann mit Hilfe des Drehringstellers zumeist auch durch grafische Auswahlmenü gescrollt werden. Dabei ist es wünschenswert, eine getroffene Auswahl auch durch eine Eingabe bestätigen zu können, so dass die Auswahl erst durch die Bestätigungseingabe wirksam geschaltet wird. Dieses erfordert die Realisierung einer zusätzlichen Tastschaltfunktion zur Bestätigungseingabe.

Aus der deutschen Offenlegungsschrift DE 10 2011 006 733 A1 ist eine Bedienvorrichtung, insbesondere für eine tontechnische Anlage bekannt, bei der ein oder mehrere gattungsgemäße Drehringsteller als mechanische Bedienelemente auf einem Touchscreen angeordnet sind. Darüber hinaus werden in diesem Dokument weitere mechanische Bedienelemente vorgeschlagen, die verbindbare oder trennbare Schaltkontakte aufweisen. Über diese Schaltkontakte ist ein Berührelement mit einer Kontaktstelle auf dem Touchscreen verbunden. Bei einer Betätigung des Bedienelements wird eine elektrische leitende Verbindung von der Kontaktstelle zum Berührelement hergestellt oder getrennt, so dass die Körperkapazität des das Berührelement berührenden Benutzers an der Kontaktstelle wirksam oder unwirksam wird. Die so realisierten Tastschalter sind dabei separat zu den ebenfalls auch dem Touchscreen angeordneten Drehringstellern ausgeführt und von diesen funktionell unabhängig.

FR 3 056 474 A1 offenbart den Oberbegriff des Anspruchs 1.

Es stellte sich die Aufgabe, einen gattungsgemäßen Drehringsteller zu schaffen, der auf besonders einfache und kostengünstige Weise zusätzlich eine Tastschaltfunktion realisiert.

Diese Aufgabe wird erfindungsgemäß dadurch gelöst, dass ein metallener oder metallisierter Ring am Grundkörper gegen eine Rückstellkraft axial verschiebbar angeordnet ist, dass der Ring sowohl elektrisch als auch mechanisch mit dem Schleifkontaktelement gekoppelt ist, und dass eine Verschiebung des Rings in Richtung auf das Touchpanel mechanisch ein Abheben des Schleifkontakts von der Erfassungsfläche bewirkt.

Durch das Abheben des Schleifkontaktelements bei Druckbetätigung des Rings entsteht so eine Unterbrechung der elektrischen Verbindung zwischen dem Schleifkontaktelement des Drehstellers und dem Touchpanel. Diese Unterbrechung kann durch das Touchpanel erkannt und als Auslösung einer Tastschaltfunktion ausgewertet werden.

Die Tastschaltfunktion dient vorzugsweise zur Bestätigung für eine durch den Drehsteller ausgewählte Funktion. Besonders vorteilhaft ist, dass sowohl die Auswahl als auch die Bestätigung der der Funktion mittels nur eines einzigen Schleifkontaktelements erfolgt.

Dieses System stellt einen robusten Mechanismus zur Schaffung einer Bestätigungsfunktion dar, der unabhängig von der Drückposition am Ring funktioniert und vorteilhafterweise keinen zusätzlichen Kontakt an der Bedienoberfläche erfordert.

Im Folgenden wird ein erfindungsgemäß ausgebildeter Drehringsteller anhand der Zeichnung dargestellt und näher erläutert. Es zeigen die
- Figur 1: den Drehringsteller in einer Explosionsansicht,
- Figur 2: eine seitliche Ansicht des Drehringstellers bei unbetätigter Druckfunktion,
- Figur 3: eine seitliche Ansicht des Drehringstellers bei betätigter Druckfunktion,
- Figur 4: die Kopplung zwischen Ring und Rampenring.

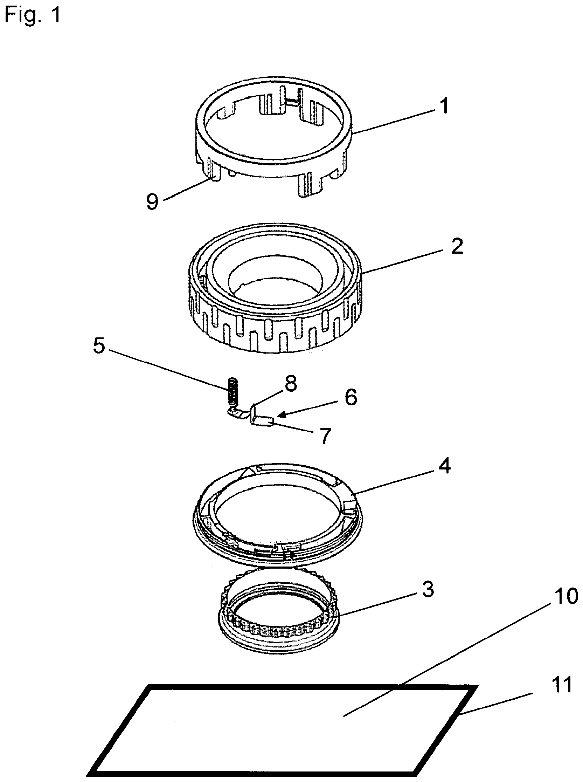

Der in der Figur 1 in einer Explosionsansicht dargestellte Drehringsteller weist einen ringförmigen Stator 3 auf, der fest auf einer kapazitiv sensierenden Erfassungsfläche 10 eines Touchpanels 11 angeordnet ist.

Das hier schematisch als Fläche dargestellte Touchpanel 11 kann entweder ohne Anzeigeelemente, also als ein einfaches Touchpad ausgeführt sein, oder aber ein Display aufweisen und daher etwa einen Touchscreen ausbilden. Vorteilhaft ist es, als Touchpanel 11 einen Touchscreen vorzusehen, da auf dessen Display die Betätigung des Drehringstellers veranschaulichende Informationen dargestellt werden können.

In jedem Fall werden die ortsauflösenden Eigenschaften der kapazitiv sensierenden Erfassungsfläche 10 und zumeist auch die, hier nicht dargestellte, zum Touchpanel 11 gehörende Auswerteelektronik zur Bestimmung der Drehstellung und gegebenenfalls der Drehweite des Drehringstellers genutzt.

Vorteilhaft ist, dass bei einem Touchpanel 11 mit einer ausreichend großen Erfassungsfläche 10, auch mehrere Drehringsteller mit demselben Touchpanel 11 realisiert werden können.

An dem am Touchpanel 11, insbesondere durch Kleben, befestigten Stator 3 ist ein hohlzylinderförmiger Grundkörper 2 drehbar gelagert, bei dessen Drehung ein ringförmiger Rampenring 4 gegen den Stator 3 mitbewegt wird.

An dem Rampenring 4 ist ein elektrisch leitendes Schleifkontaktelement 6 angeordnet, welches einen Schleifkontakt 7 aufweist, der an der Erfassungsfläche 10 des Touchpanels 11 anliegt und dessen Position an der Erfassungsfläche 10 durch eine nichtdargestellte Auswerteelektronik des Touchpanel 11 ermittelt werden kann. Aus mehreren ermittelten Positionen kann wiederum die Drehweite des Grundkörpers 2 und des Rampenrings 4 gegen den Stator 3 bestimmt werden.

Zwischen zwei zueinander konzentrisch angeordneten Wänden des Grundkörpers 2 ist ein metallener oder metallisierter, vorzugsweise verchromter, Ring 1 angeordnet, der gegen eine Rückstellkraft niedergedrückt werden kann. Der Ring 1 weist mehrere einstückig angeformte Nasen 9 auf, die sich in Richtung des Rampenrings 4 erstrecken. Die Nasen 9 sind, in hier nicht dargestellte, etwa gleich große Führungskanäle am Grundkörper 2 eingesetzt. Hierdurch ist der Ring 1 zwar translatorisch gegen den Grundkörper 2 verschiebbar, jedoch nicht rotatorisch gegen den Grundkörper 2 verdrehbar. Die Drehungen von Grundkörper 2 und Ring 1 sind somit fest miteinander gekoppelt.

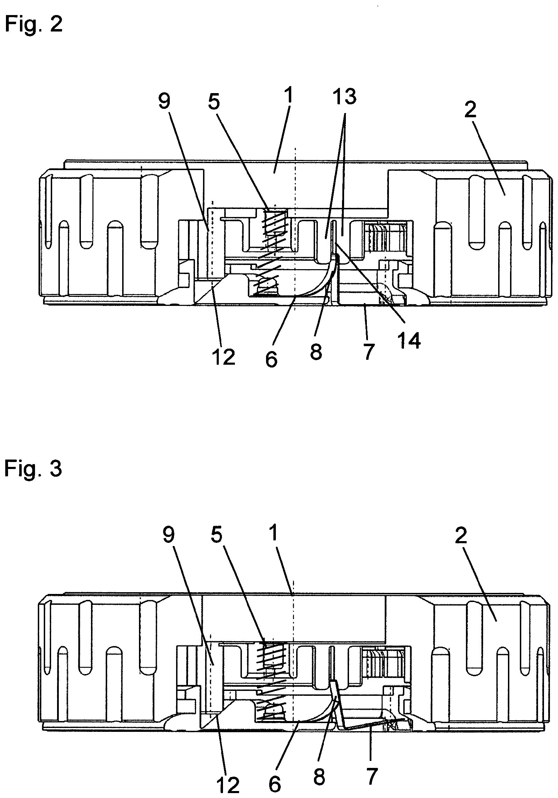

In den Figuren 2 und 3 ist der Grundkörper 2 von der Seite jeweils in einer teilweise geschnittenen Ansicht dargestellt, so dass Teile des Rings 1 und des Rampenrings 4 sichtbar sind.

Erkennbar ist unter anderem eine der Nasen 9. Diese stützt sich auf einer am Rampenring 4 angeformten Gleitfläche 12 ab, die schräg zur Rotationsebene des Drehstellers ausgerichtet ist. Zwei Anformungen 13 am Ring 1 bilden einen Spalt 14 aus, in den ein spitzwinklig abgebogener Abschnitt 8 des Schleifkontaktelements 6 eingesetzt ist.

Die Erfassung einer Drehung des Grundkörpers 2 und des vom Grundkörper 2 mitgeführten Rampenrings 4 gegen den Stator 3 erfolgt über das Schleifkontaktelement 6, das aus dünnem Kupferblech besteht und über eine leitfähige Feder 5 elektrisch mit dem Ring 1 verbunden ist. Die Feder 5 stellt so eine elektrische Kopplung zwischen dem Ring 1 und der Erfassungsfläche 10 des Touchpanels 11 her.

Der Ring 1 besteht entweder aus massivem Metall oder aus einem Kunststoffkörper, der mit einer Metallisierung wie etwa einer Chromschicht versehen ist. Er verfügt vorzugsweise über eine ausreichend große eigene elektrische Kapazität, um die kapazitive Erfassungsfläche 10 des Touchpanels 11 beeinflussen zu können. Eine Verschiebung des Schleifkontakts 7 auf dem Touchpanel 11 durch Drehung des Grundkörpers 2 ist damit unabhängig vom Wert der elektrischen Kapazität des Körpers eines menschlichen Benutzers wird dadurch sogar bei Verwendung isolierender Handschuhe erkannt.

Die Wirkung einer Drehbetätigung des Grundkörpers 2 und einer Druckbetätigung des Rings 1 wird durch die Figuren 2 bis 4 verdeutlicht.

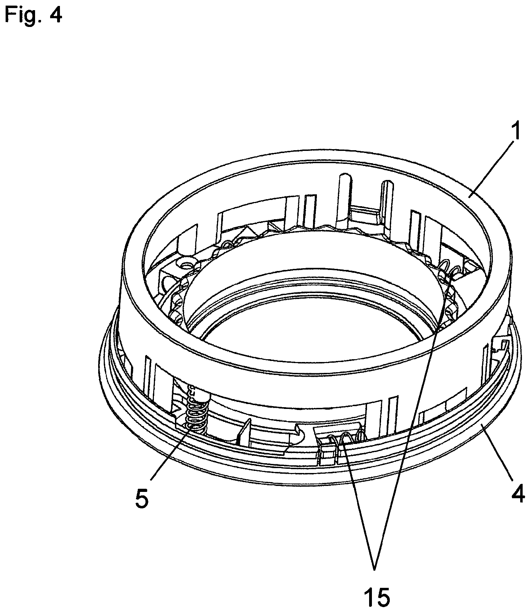

Die Figur 2 zeigt den Drehringsteller im Ausgangszustand, also ohne eine Druckbetätigung des Ringes. Erkennbar ist, dass der obere Rand des Rings 1 ein Stück weit über den oberen Rand des Grundkörpers 2 hervorsteht. Ein Endabschnitt einer am Ring 1 angeformten Nase 9 liegt an einer schrägen Gleitfläche 12 des Rampenrings 4 an. Darüber hinaus besteht eine relativ feste, aber nicht starre mechanische Kopplung zwischen dem Ring 1 und dem Rampenring 4. Wie Figur 4 zeigt, wird diese Kopplung über mehrere Koppelfedern 15 vermittelt, die zwischen dem Ring 1 und dem Rampenring 4 entlang deren Umfangsrichtungen ausgerichtet eingesetzt sind. Die Kopplung ist dabei ausreichend starr, dass der Rampenring 1 bei Drehungen des Grundkörpers 2 und des damit drehfest verbundenen Rings 1 synchron mitgeführt wird.

In der Figur 3 ist der Drehringsteller bei einer erfolgenden Druckbetätigung dargestellt. Der obere Rand des Rings 1 befindet sich hier mit dem oberen Rand des Grundkörpers 2 auf etwa gleicher Höhe.

Durch Vergleich der Figuren 2 und 3 ist ersichtlich, dass sich durch die axiale Verschiebung des Rings 1 auch die Nase 9 in Richtung auf den Rampenring 4 verschoben hat und der Endabschnitt der Nase 9 in der Figur 3 nun an einer tieferen Stelle der schrägen Gleitfläche 12 anliegt. Das Abgleiten der Nase 9 an der Gleitfläche 12 bewirkt eine rotatorische Ausweichbewegung des Rampenrings 4, wodurch die in der Figur 4 dargestellten Koppelfedern 15 zusammengepresst werden.

Die Ausweichbewegung des Rampenrings 4 liegt nur in der Größenordnung weniger Winkelgrade und ist damit üblicherweise zu gering, um durch ein Touchpanel 11 als Verdrehung erkannt zu werden. Sie beeinflusst somit nicht in störender Weise die Erfassung der Drehstellung des Grundkörpers 2.

Die zusammengepressten Koppelfedern 15 erzeugen eine Rückstellkraft und schieben nach Beendigung einer Druckbetätigung den Rampenring 4 und über die Gleitfläche 12 und Nase 9 auch den Ring 1 wieder in ihre Ausgangspositionen zurück. Die Rückstellbewegung des Rings 1 wird dabei zusätzlich durch die Rückstellkraft der Feder 5 unterstützt.

Bei der durch die Druckbetätigung des Rings 1 ausgelösten Verdrehung des Rampenrings 4 wird auch das daran befestigte Schleifkontaktelement 6 aus Kupferblech relativ zum Ring 1 bewegt. Das Schleifkontaktelement 6 ist in seinem oberen Bereich mit seinem spitzwinklig abgebogenen Abschnitt 8 in einem durch zwei parallelen Anformungen 13 gebildeten Spalt 14 des Rings 1 gefangen, wodurch der freie Endabschnitt des Schleifkontaktelements 6 verkippt und die Drehbewegung direkt in ein Abheben des Schleifkontakts 7 von der Erfassungsfläche 10 des Touchpads 11 umgewandelt wird.

Das Abheben des Schleifkontakts 7 von der Erfassungsfläche 10 wird durch das kapazitive Touchpanel 11 erkannt und kann in der Erfassungssoftware als der Befehl "Eingabe" oder "Enter" interpretiert werden. Sobald die Druckbetätigung des Rings 1 wieder aufgehoben wird, dreht sich der Rampenring 4 zurück, womit sich der Schleifkontakt 7 des Schleifkontaktelements 6 wieder absenkt und eine erfassbare Position auf der Erfassungsfläche 10 des Touchpanels 11 einnimmt.

### Bezugszeichen

- 1: Ring
- 2: Grundkörper
- 3: Stator
- 4: Rampenring
- 5: Feder
- 6: Schleifkontaktelement
- 7: Schleifkontakt
- 8: abgebogener Abschnitt
- 9: Nasen
- 10: Erfassungsfläche
- 11: Touchpanel
- 12: Gleitfläche
- 13: Anformungen
- 14: Spalt
- 15: Koppelfedern

## Patentansprüche

1. Drehringsteller mit einem auf einer kapazitiv sensierenden Erfassungsfläche (10) eines Touchpanels (11) angeordneten Stator (3), mit einem am Stator (3) drehbar gelagerten Grundkörper (2) und mit einem gegen den Stator (3) verdrehbaren Rampenring (4), an dem mindestens ein elektrisch leitendes Schleifkontaktelement (6) angeordnet ist, welches mit einem Schleifkontakt (7) an der Erfassungsfläche (10) anliegt und dessen Position an der Erfassungsfläche (10) durch das Touchpanel (11) ermittelt werden kann,
wobei
ein metallener oder metallisierter Ring (1) am Grundkörper (2) gegen eine Rückstellkraft axial verschiebbar angeordnet ist,
wobei der Ring (1) sowohl elektrisch als auch mechanisch mit dem Schleifkontaktelement (6) gekoppelt ist, und
**dadurch gekennzeichnet,**
**dass** eine Verschiebung des Rings (1) in Richtung auf das Touchpanel (11) mechanisch ein Abheben des Schleifkontakts (7) von der Erfassungsfläche (10) bewirkt.

2. Drehringsteller nach Anspruch 1, **dadurch gekennzeichnet, dass** das Schleifkontaktelement (6) aus Kupferblech besteht.

## Claims

1. Rotary ring actuator with a stator (3) arranged on a capacitively sensing detection surface (10) of a touch panel (11), with a base body (2) rotatably mounted on the stator (3) and with a ramp ring (4) rotatable against the stator (3), on which at least one electrically conductive sliding contact element (6) is arranged, which lies with a sliding contact (7) against the detection surface (10) and whose position on the detection surface (10) can be determined by the touch panel (11),
wherein a metal or metallised ring (1) is arranged on the base body (2) so as to be axially displaceable against a restoring force,
the ring (1) being coupled both electrically and mechanically to the sliding contact element (6), and
**characterized in that** a displacement of the ring (1) in the direction of the touch panel (11) mechanically causes the sliding contact (7) to be lifted off the detection surface (10).

2. A rotary ring actuator according to claim 1, **characterized in that** the sliding contact element (6) is made of sheet copper.

## Revendications

1. Actionneur à bague rotative avec un stator (3) disposé sur une surface de détection (10) à détection capacitive d'un panneau tactile (11), avec un corps de base (2) monté à rotation sur le stator (3) et avec une bague à rampe (4) pouvant tourner par rapport au stator (3), sur laquelle est disposé au moins un élément de contact glissant (6) électriquement conducteur, qui s'applique par un contact glissant (7) contre la surface de détection (10) et dont la position sur la surface de détection (10) peut être déterminée par le panneau tactile (11),
une bague métallique ou métallisée (1) étant disposée sur le corps de base (2) de manière à pouvoir être déplacée axialement contre une force de rappel,
la bague (1) étant couplée à la fois électriquement et mécaniquement à l'élément de contact glissant (6), et
**caractérisé en ce que** qu'un déplacement de la bague (1) en direction de l'écran tactile (11) provoque mécaniquement un soulèvement du contact frottant (7) de la surface de détection (10).

2. Actuateur rotatif selon la revendication 1, **caractérisé en ce que** l'élément de contact glissant (6) est constitué d'une tôle de cuivre.
